# EUROPEAN PATENT SPECIFICATION

(11) **EP 1 369 710 B1**
(45) Date of publication and mention of the grant of the patent: **26.07.2006**
(21) Application number: 03012087.7
(22) Date of filing: 28.05.2003
(51) Int. Cl.: G02B 1/04, A61F 2/16, B29D 11/02, A61L 27/16

(54) **Method of manufacturing intraocular lenses and intraocular lenses manufactured by the method**
Verfahren zur Herstellung von Intraokularlinsen und so hergestellte Intraokularlinse
Procédé de fabrication de lentilles intraoculaires et lentilles intraoculaires fabriquées au moyen de ce procédé

(30) Priority: 04.06.2002 JP 2002163074
(43) Date of publication of application: 10.12.2003
(73) Proprietor: NIDEK CO., LTD, Gamagori-shi, Aichi 443-0035 (JP)
(72) Inventor: Ichikawa, Ken, Hoi-gun, Aichi 441-0105 (JP); Nakahata, Yoshihiro, Gamagori-shi, Aichi 443-0011 (JP); Sunada, Tsutomu, Toyohashi-shi, Aichi 441-3101 (JP)
(74) Representative: Hofer, Dorothea

(56) References cited:
- EP-A- 1 043 605
- WO-A-97/35896
- US-A- 3 961 379
- US-B1- 6 353 069
- PATENT ABSTRACTS OF JAPAN vol. 013, no. 339 (C-624), 31 July 1989 (1989-07-31) & JP 01 118541 A (TOME SANGYO KK), 11 May 1989 (1989-05-11)

## Description

### 1. Field of the Invention

The present invention relates to a method of manufacturing an intraocular lens and an intraocular lens manufactured by the method.

### 2. Description of Related Art

From US 3,961,379 there is known a method for modifying the properties of solid polymers in which a polymerizable substance is introduced into the polymer to be modified and is then polymerized.

From EP 1 043 605 A1 there is known a method for producing contact lenses from a macromer/comonomer solution by polymerization.

From WO 97/35896 A1 it is known to make intraocular lenses from hydrogels which are prepared from cross-linked copolymers of N-benzyl-N-methylacrylamide.

From JP 01-118541 A a method for processing soft ocular lens material is known. In this method an unfixed hard polymer is removed from a molded item. A soft material is impregnated with a monomer solution consisting of a monomer giving the hard polymer, a radical polymerization initiator, a chain transfer agent and a polymerization inhibitor and the monomer giving said hard polymer is polymerized to prepare a polymer blend.

As one of cataract operation methods, there has commonly been used a method of implanting an intraocular lens in place of a crystalline lens (lens nucleus) after extracting the crystalline lens. Such method includes the following steps of: making an incision in an eyeball of a patient's eye for inserting therethrough the intraocular lens; fragmenting and aspirating a clouded crystalline lens of the eye through the incision by means of an ultrasonic cataract-surgery device or the like; and inserting the intraocular lens into the eye through the incision to implant the intraocular lens in a place where the crystalline lens once lay.

Such intraocular lenses include a hard-type intraocular lens made of PMMA (polymethyl methacrylate) or the like and a soft-type intraocular lens made of acrylic or the like, which is foldable. These intraocular lenses can be manufactured by a method (a cast molding method) of injecting a raw material monomer into a casting mold having a desired lens shape and then polymerizing and curing the monomer material or another method (a lathe cutting method) of cutting a sheet obtained by polymerization and cure of a raw material monomer into an intraocular lens having a desired shape.

However, it has been reported that the intraocular lenses manufactured by the above methods caused some problems due to voids formed in a base material for an intraocular lens, the base material being produced by the polymerization and cure.

For instance, it has been reported that in the soft-type intraocular lens made of hydrophobic (or nonhydrous) soft acrylic, many small luminescent or bright spots called glistenings appeared in an optic part (a lens part) of the intraocular lens after implanted in an eye. A report says that the occurrence of luminescent spots does not affect minimum resolution, so-called visual acuity, whereas it may affect contrast sensitivity, and surmises that such occurrence of luminescent spots would be caused by the aqueous humor having entered voids formed in the intraocular lens (the base material).

Furthermore, the soft-type intraocular lens made of hydrophilic (hydrous) soft acrylic has a problem that proteins and others are apt to enter the voids formed in the intraocular lens (the base material) after implanted in the eye, which may lower the transparency of the intraocular lens.

### SUMMARY OF THE INVENTION

The present invention has been made in view of the above circumstances and has an object to overcome the above problems and to provide a method of manufacturing an intraocular lens, capable of preventing the formation of voids in a base material for an intraocular lens, and an intraocular lens manufactured by the method.

Additional objects and advantages of the invention will be set forth in part in the description which follows and in part will be obvious from the description, or may be learned by practice of the invention. The objects and advantages of the invention may be realized and attained by means of the instrumentalities and combinations particularly pointed out in the appended claims.

The object is attained by a method of manufacturing an intraocular Lens according to claim 1.

Further developments of the present invention are given in the dependent claims.

### BRIEF DESCRIPTION OF THE DRAWINGS

The accompanying drawings, which are incorporated in and constitute a part of this specification illustrate an embodiment of the invention and, together with the description, serve to explain the objects, advantages and principles of the invention.

In the drawings,
Fig. 1 is a flowchart showing a flow of a polymerization method in an embodiment;
Fig. 2 is a flowchart showing a flow of another polymerization method in the embodiment; and
Fig. 3 is a flowchart showing a flow of a method for inspecting the degree of formation of voids in a base material for an intraocular lens.

### DETAILED DESCRIPTION OF THE PREFERRED EMBODIMENTS

A detailed description of a preferred embodiment of an intraocular lens manufacturing method and an intraocular lens manufactured by the method, embodying the present invention will now be given referring to the accompanying drawings.

In the present embodiment, a lens base material is produced by polymerization and cure of a monomer solution which is a raw material used for an intraocular lens of a hydrophobic soft type, and the base material is immersed in the monomer solution, thereby impregnating the base material with the monomer. The base material after impregnated with the monomer is polymerized again to prevent the formation of voids in the base material.

The base material for the hydrophobic soft intraocular lens can be made of a single monomer or a mixture of plural kinds of monomers, the monomers being capable of forming a soft material. To regulate the hardness (softness) of the base material, a monomer capable of forming a hard material may be added as appropriate.

Concrete examples of the monomer for a soft material (hereinafter, referred to as a soft monomer) include acrylic ester such as methyl acrylate, ethyl acrylate, propyl acrylate, 2-ethylhexyl acrylate, butyl acrylate, or the like.

Concrete examples of the monomer for a hard material (hereinafter, referred to as a hard monomer) include methacrylic acid ester such as methyl methacrylate, ethyl methacrylate, propyl methacrylate, butyl methacrylate, or the like.

In the case where a base material is made of the above soft monomer or the mixture of the soft monomer and the hard monomer, a cross-linking agent and a polymerization initiator may be added as necessary. To be more precise, the cross-linking agent may be selected from any materials usable as a cross-linking agent for production of the base material for an intraocular lens, for example, dimethacrylate ester such as ethylene glycol dimethacrylate, diethylene glycol dimethacrylate, triethylene glycol dimethacrylate, or the like. The cross-linking agent is used in an amount of 0.5 to 10 wt% based on the total weight of the monomer(s) forming a base material. The polymerization initiator may be selected from any materials usable as a polymerization initiator for production of the base material for an intraocular lens, for example, azobisisobutyronitrile, azoisobutyrovaleronitrile, benzoin, methyl orthobenzoyl benzoate, etc. In addition to above, an ultraviolet absorber may be added as appropriate to impart an ultraviolet absorption effect to the base material.

In the present embodiment, the base material made of the above mentioned monomers, cross-linking agent, and polymerization initiator is immersed again in a monomer solution, thereby to impregnate the base material with the monomer. The monomer to be impregnated into the base material is used to fill the voids formed in the base material. Accordingly, the monomer is not particularly limited and may be any monomer if only it is polymerizable and good in biocompatibility. However, the same monomer (or mixture if several kinds of monomers are used in combination to make the base material) as that used for the production of the base material is preferably used to minimize the changes in physical properties of the produced base material. The monomer solution used in this case is also added with the above mentioned cross-linking agent and polymerization initiator of respective predetermined amounts.

### <Manufacture of an intraocular lens>

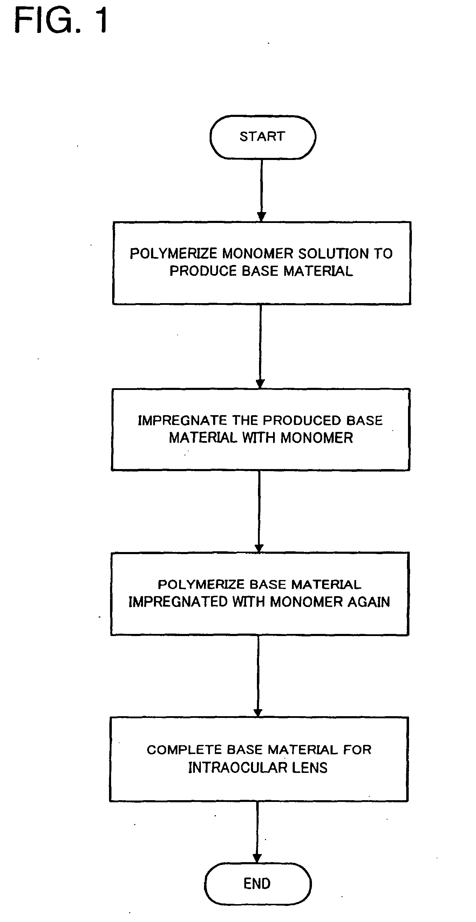

Next, a method of manufacturing an intraocular lens using the above mentioned monomers and others is explained with reference to a flowchart in Fig. 1.

In this embodiment, a soft monomer, a hard monomer, and a cross-linking agent are injected into a vessel so that they are mixed at a predetermined ratio. The mixing ratio between the soft monomer and the hard monomer to form a copolymer is selectively determined according to respective physical properties. This mixing ratio may be a ratio at which a finished intraocular lens can have so hardness (softness) as to permit the lens to be folded in a surgical operation.

After completion of mixing of the soft monomer, hard monomer, and cross-linking agent, a polymerization initiator is added and mixed with the mixture. Then, this mixed solution is poured into a casting mold having a flat-plate-shape and immersed in a water bath at 60°C and 90°C in turn, each for 24 hours. Such stepwise increasing of the temperature enables more stable polymerization. After a predetermined time (48 hours in total) from the start of polymerization according to the above steps, the flat-plate-shaped base material is taken out from the casting mold. The base material is put in a vacuum oven and left at 95°C for 24 hours. Thus, polymerization is completed.

Subsequently, the produced base material is fully immersed in the monomer mixed solution having the same composition as above and left for a predetermined time to impregnate the base material with the monomer. This time (duration) for impregnation varies according to the shape of the base material and the surrounding environment (temperature, atmospheric pressure, etc.) and may be the time enough to allow the monomer to enter the voids formed in the base material.

Preferably, the time for impregnation is set in a range of 24 hours to 120 hours, more preferably, 48 hours to 96 hours. If this time is less than 24 hours, it would be difficult to impregnate the monomer into voids formed in the base material. Although the time may be 120 hours or more, the longer time would reduce production efficiency.

After the impregnation in the monomer mixed solution for the predetermined time, the base material is taken out therefrom and wiped to remove the monomer from the surface. Thereafter, the base material is heated in a dry oven for a predetermined time to cause second polymerization. Furthermore, the base material is heated in a vacuum oven for a predetermined time to completely terminate the polymerization.

In the above manner, the base material produced by first polymerization is impregnated with the monomer for second polymerization, so that the voids formed in the base material through the first polymerization can be filled.

Subsequently, the base material produced by such two-stage polymerization is cut into a desired lens shape by a well known cutting process, thus making an intraocular lens. In order to make a 3-piece type intraocular lens, for example, the produced base material is cut into a lens shape and ground, thereby forming a lens part (an optic part) of the 3-piece type intraocular lens.

Then, support parts (haptic parts) are welded to the lens part. The finished intraocular lens is thus obtained.

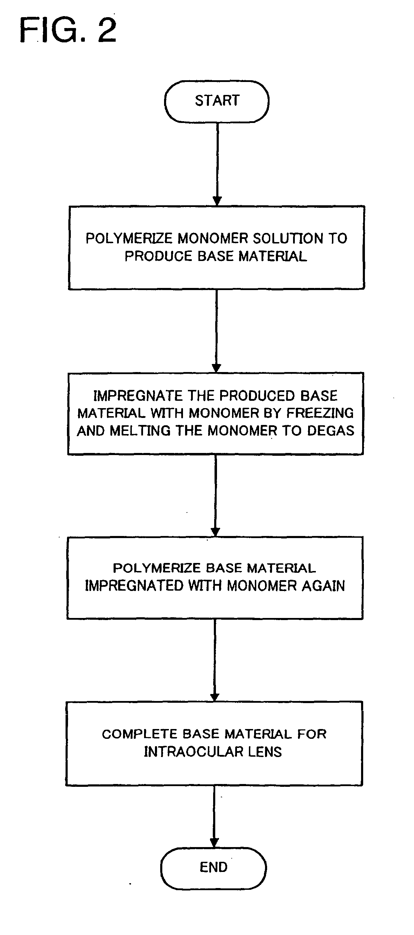

It is to be noted that the method of impregnating the base material with the monomer is not limited to above. For example, as shown in the flowchart of Fig. 2, when the base material is impregnated with the monomer while freezing and melting the monomer to remove gases from the monomer (a degassing operation), the voids in the base material can further be reduced.

To be concrete, the base material obtained after the first polymerization and the monomer solution are put in a sealed container which can be vacuumized. The container internally holding the base material and the monomer solution is immersed in a freezing medium such as liquid nitrogen, freezing the monomer solution. Then, the container is taken out from the freezing medium, and a vacuum pump or the like is used to reduce the inside pressure of the container, thereby performing the degassing operation. This degassing is continued until the monomer solution is melted. The above freezing and melting operation is repeated several times and finally the sealed container is left standing for a predetermined time under the reduced pressure to sufficiently impregnate the base material with the monomer. This time for leaving the container to stand may be set in a range of 24 hours to 120 hours. Thereafter, the base material is taken out from the sealed container. The surface of the base material is wiped to remove the monomer therefrom. The above operations are performed using the dry oven and the vacuum oven to completely terminate polymerization. Subsequently, the produced base material is cut into a desired lens shape by a cutting process to finish an intraocular lens.

In the present embodiment, the base material after polymerized twice is shaped into an intraocular lens by the cutting process. The present invention is not limited thereto and may be applied to an intraocular lens manufactured by for example a cast molding method. In this case, the following steps are performed; a monomer solution injected into a casting mold having a desired lens shape is polymerized to produce a base material this base material is formed in a lens shape and immersed into a monomer solution (preferably, having the same composition as that of the monomer solution used for forming the base material); and the monomer impregnated into the base material is polymerized. Because the monomer as impregnated into the base material is polymerized, possible swelling might cause changes in shape and refractive index of the base material. Accordingly, the degrees of such changes are preferably considered in advance in preparing a casting mold whereby a finished lens having a desired refractive index can be manufactured.

In the present embodiment, the hydrophobic soft-type intraocular lens is exemplified to explain the manufacturing method thereof, but the present invention is not limited thereto. The method according to the present invention can be used to fill the voids formed in the base material with the polymerizable monomer, regardless of the physical properties of the base material. The present method can also be applied to a hydrophilic soft-type intraocular lens made of for example 2-hydroxyethyl methacrylate, vinyl pyrolidone, etc.

### <Glistening inspection>

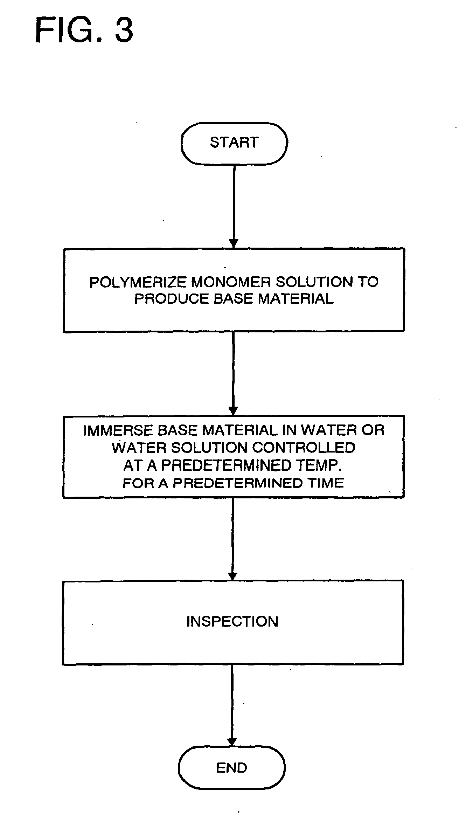

Next, the base material produced by the two-stage polymerization in the present embodiment and other base materials produced by different methods are used for an inspection to check the degree of occurrence of glistenings (luminescent spots) in each base material. The method of inspecting (evaluating) the degree of formation of voids in each base material (namely, the void formation state) is explained below with reference to a flowchart in Fig. 3.

The inspection to check the occurrence degree of luminescent spots is carried out as below by using the base material produced by the above intraocular lens manufacturing method. The base material produced by the two-stage polymerization is cut into disks each having a substantive intraocular lens shape (10 mm in diameter and 1 mm in thickness in the present embodiment). These disks (base materials) are immersed in constant temperature water bathes controlled at constant temperatures, and the disks are left standing in the bathes for respective predetermined times.

The water solution filled in the above constant temperature water bathes is preferably saline, Ringer's solution, and others, which are close to bodily fluid in order to establish a similar environment to am intraocular condition. However, the water solution may be pure water, tap water, or the like because the present inspection only requires to observe the formation state of voids in the disk (base material).

The water temperature in each constant temperature water bath is preferably in a range of 40°C to 70°C, more preferably, 45°C to 60°C. If the water temperature is lower than 40°C, it becomes difficult to intentionally generate luminescent spots. If the water temperature exceeds 70°C, on the other hand, luminescent spots would occur rapidly, it becomes difficult to compare occurrence degrees of luminescent spots between disks (base materials).

The time for immersion of the disks (base materials) in each water bath is preferably in a range of 20 min. to 120 min., more preferably 30 min. to 60 min. If the immersion time is less than 20 min., the disk (base material) could not sufficiently be impregnated with water. The immersion time may exceed 120 min; however, as the immersion time becomes longer than 120 min., it will take a much time to get through the inspection, which reduce the inspection efficiency.

After immersion in each water bath for a predetermined time, the disk (base material) is taken out together with the constant temperature water to room temperature, and variations of the disk (base material) with time is immediately observed through a microscope. If the disk (base material) alone is taken out from the water bath and then observed through the microscope, luminescent spots would occur very fast, which makes it difficult to properly evaluate each base material. In order to cause the luminescent spots to occur at an appropriate speed, it is preferable to take out each disk (base material) together with the constant temperature water and observe the variations with time through the microscope. This makes it possible to more conveniently evaluate each disk (base material). The occurrence degree of luminescent spots varies with time according to time (duration) and temperature for immersion of each disk (base material) in the constant temperature water.

According to the above inspection method, the occurrence degree of luminescent spots in each base material can be observed with time. Consequently, the amount of voids formed in each base material can roughly be grasped based on the number of the luminescent spots that occurred in each base material and the occurrence speed of those luminescent spots. It is therefore possible to evaluate the appropriateness of each base material for an intraocular lens.

In the present embodiment, the base material is inspected before finishing an intraocular lens. Alternatively, the same inspection method as above may also be used with respect to a finished intraocular lens to inspect glistenings and the formation degree of voids in each lens.

The occurrence degree of luminescent spots with respect to the temperature and time (duration) for immersion is shown in Table 1. This table represents the results of study of preferable conditions for intentionally generating luminescent spots in each base material.

The raw materials used for the base material include 162.0 parts by weight of ethylene glycol phenyl ether acrylate and 12.0 parts by weight of n-butyl acrylate as a soft monomer, 119.1 parts by weight of n-butyl methacrylate as a hard monomer, 6.0 parts by weight of 1,4-butanediol diacrylate as a cross-linking agent, and 0.3 part by weight of azoisobutyronitrile as a polymerization initiator. Those raw materials are mixed and polymerized. The thus produced flat-plate-shaped base material is cut into disks each having a diameter of 10 mm and a thickness of 1 mm. Each disk is visually observed through a microscope (SMZ1500, manufactured by Nikon Corporation) to check luminescent spots that occurred in each disk in accordance with the above mentioned inspection method. The water in the constant temperature water bathes was pure water and the water temperatures in the bathes were set at 40°C, 45°C, 50°C, 60°C, and 70°C respectively. For each water temperature, the immersion times were set at 10 min., 20 min., 30 min., 40 min., 50 min., 60 min., and 120 min. The inspection period was one hour from the time the disk was taken out from the water bath (i.e., an inspection start time)

**Table 1 [Comparison of luminescent spots in each base material at different water temperatures and immersion times]**

| | 10 (min.) | 20 | 30 | 40 | 50 | 60 | 120 |
|---|---|---|---|---|---|---|---|
| 40 (°C) | X: × | X: × | X: × | X: × | X: × | X: × | X: Δ |
| 45 | X: × | X: × | X: × | X: Δ | ○ | ○ | ○ |
| 50 | X: × | X: Δ | X: Δ | ○ | ○ | ○ | Y : Δ |
| 60 | X: × | X: Δ | ○ | Y: Δ | Y: × | Y: × | Y: × |
| 70 | X: Δ | Y: Δ | Y: Δ | Y: × | Y: × | Y: × | Y: × |

| | | | | | | | |
|---|---|---|---|---|---|---|---|
| X: Peripheral part, Y: Whole area | | | | | | | |

In Table 1, "X: ×" indicates the case where no luminescent spot occurred in even the peripheral part of a disk even after one hour from the inspection start time, and "Y:×" indicates the case where luminescent spots occurred in the whole area of a disk immediately after the disk was taken out from the water bath. These cases are considered as conditions unable to be evaluated. "X: Δ" shows the case where luminescent spots occurred in only the peripheral part of a disk after one hour from the inspection start; however, it took a long time to cause the luminescent spots to occur; and "Y:Δ" shows the case where luminescent spots occurred in the whole area of a disk soon but not so fast as in the "Y:×" case. These cases are considered as conditions difficult to evaluate. Furthermore, " ○ " indicates that the occurrence degree of luminescent spots was moderate, which was a preferable condition to inspect the occurrence degree of luminescent spots in each disk (base material).

As shown in Table 1, in the case of the water temperature of 40°C, it was difficult to cause luminescent spots to occur even though the immersion time was changed, whereas it was possible to cause a few luminescent spots to occur when the immersion time was set at about 120 min. In the case of 45°C, it was possible to cause luminescent spots to moderately occur in a disk when the immersion time was set at 50 min. to 120 min, so that the occurrence degree of luminescent spots in each disk could be evaluated. In the case of 50°C, the immersion time of 40 min. to 60 min. was a preferable condition for the glistening inspection. In the case of 60°C, similarly, the immersion time of about 30 min. was a preferable condition for the glistening inspection. In the case of 70°C, the luminescent spots occurred immediately in the peripheral part of a disk when the immersion time was set at 10 min. and in the whole area of the disk when the immersion time was set at 20 min. or more, so that it was difficult to determine suitable conditions to cause luminescent spots to occur moderately.

It is to be noted that the inspection method described in the present embodiment allows evaluation for the appropriateness of using the base material to manufacture an intraocular lens, in about several hours, without the need for finishing the intraocular lens.

### (Example 1)

In Example 1, evaluations were made on the occurrence degree of luminescent spots in a base material for an intraocular lens, produced in accordance with the producing method described above in the present embodiment. These evaluations were carried out by the glistening inspection mentioned above. This glistening inspection was performed under a condition considered preferable in Table 1, namely at a water temperature of 45°C and an immersion time of 60 min.

The raw materials used to produce the base material were the same as those used in the glistening inspection (i.e., 162.0 parts by weight of ethylene glycol phenyl ether acrylate, 12.0 parts by weight of n-butyl acrylate, 119.1 parts by weight of n-butyl methacrylate, 6.0 parts by weight of 1,4-butanediol diacrylate, and 0.3 part by weight of azoisobutyronitrile). The monomer solution used for immersing therein the base material was composed of the same materials as the raw materials of the base material.

In accordance with the intraocular lens manufacturing method mentioned above, the monomer solution was polymerized to produce a flat-plate-shaped base material. Then, this base material was immersed in a monomer solution composed of the same raw materials as those of the base material for 96 hours so that voids formed in the base material were impregnated with the monomer. The base material having been impregnated sufficiently with the monomer was taken out from the monomer solution and wiped to remove the monomer from the surface. The base material was then put in a dry oven at 90°C for 24 hours to cause second polymerization. Furthermore, the base material was allowed to stand in a vacuum oven at 95°C for 24 hours to complete the second polymerization.

The base material produced by the two-stage polymerization was cut into a disk having a diameter of 10 mm and a thickness of 1 mm. This disk was inspected by the above mentioned glistening inspection to check the occurrence degree of luminescent spots. The constant temperature water bath was previously filled with pure water controlled at 45°C, and the disk was immersed in the water bath. Thereafter, the disk was taken out together with the constant temperature water from the water bath to room temperature and immediately observed through the microscope to check variations with time. This observation was conducted to see the state of the disk after 10 min. and 60 min. respectively from the time the disk was taken out from the water bath. The observation results were shown in Table 2.

### (Example 2)

In Example 2, evaluations were made on the occurrence degree of luminescent spots in the base material produced in accordance of the method of impregnating the base material with the monomer by freezing and melting. The raw materials of the base material and the monomer solution used in this example were the same as those in Example 1.

The base material after the first polymerization and the monomer solution were put in a sealed container with a cock. The whole container was immersed in liquid nitrogen to completely freeze the monomer solution, and then the container was taken out from the liquid nitrogen. After that, a vacuum pump connected to the cock was operated to form a vacuum in the container, thereby performing a degassing operation. This degassing operation was continued until the frozen monomer solution was melted (fused). The freezing and melting were repeated three times and then the base material in the sealed container filled with the monomer solution was left standing for 96 hours under a reduced pressure. Subsequently, the base material was taken out from the sealed container and lightly wiped to remove the monomer from the surface. The base material was put in the dry oven at 90°C for 24 hours to cause polymerization and was allowed to stand in the vacuum oven at 95°C for 24 hours thereby completing the polymerization.

The base material produced by the two-stage polymerization was cut into a disk having the same shape as that in Example 1 and then the glistening inspection was performed under the same conditions as in Example 1.

### (Comparative Example 1)

In Comparative example 1, evaluations were made on the occurrence degree of luminescent spots in a base material for an intraocular lens, produced in accordance with a conventional producing method (which differs only in the absence of the second polymerization from the method in the example 1). The raw materials of the base material were the same as those in Example 1. The produced base material was cut into a disk having the same shape as that in Example 1 and the glistening inspection was carried out under the same conditions as in Example 1.

**Table 2 [Comparison in variations of each base material with time at a water temperature of 45°C and an immersion time of 60 min.]**

| | 10 min. | 60 min. | Result |
|---|---|---|---|
| Example 1 | A few luminescent spots occurred in the peripheral part of a base material. | A larger number of luminescent spots occurred in the peripheral part as compared with those in the 10 min. case. | ○ |
| Example 2 | Few luminescent spot was observed. | Few luminescent spot was observed. | ○ |
| Comp. Exam. 1 | Uncounted numbers of luminescent spots occurred in the whole area of a base material, which was clouded. | Uncounted numbers of luminescent spots occurred in the whole area of a base material, which was clouded. | × |

### (Results)

As compared with the base material in Comparative example 1, a very few luminescent spots occurred in the base materials in Examples 1 and 2. It was therefore evident that the intraocular lens manufacturing method according to the present invention was more effective to fill voids in the base material.

As described above, according to the present invention, it is possible to prevent the formation of voids in a base material for an intraocular lens.

## Claims

1. A method of manufacturing an intraocular lens of a soft type which is foldable, including:
a first step of making a first monomer mixed solution with plural monomers and polymerizing the plural monomers to produce a base material for the intraocular lens and
a second step of heating the base material produced in the first step in a vacuum oven to terminate the polymerization.
**characterized by**
a third step of immersing the base materials into a second monomer mixed solution which is the same as the first monomer mixed solution to impregnated the base material with the second monomer mixed solution after the second step;
a fourth step of taking out the base material from the second monomer mixed solution and removing the second monomer mixed solution from a surface of the base material; and
a fifth step of heating the base material in a vacuum oven to terminate the polymerization after the fourth step.

## Patentansprüche

1. Verfahren zum Herstellen einer Intraokularlinse des weichen Typs, die biegsam ist mit:
einem ersten Schritt des Herstellens einer ersten Mischungslösung aus Monomeren mit mehreren Monomeren und des Polymerisierens der mehreren Monomere zum Herstellen eines Grundmaterials für die Intraokularlinse; und
einem zweiten Schritt des Erwärmens des Grundmaterials, das in dem ersten Schritt hergestellt wurde, in einem Ofen zum Beenden der Polymerisation,
**gekennzeichnet durch**
einen dritten Schritt des Eintauchens des Grundmaterials in eine zweite Mischungslösung aus Monomeren, die dieselbe ist, wie die erste Mischungslösung aus Monomeren zum Imprägnieren des Grundmaterials mit der zweiten Mischungslösung aus Monomeren nach dem zweiten Schritt;
einem vierten Schritt des Herausnehmens des Grundmaterials aus der zweiten Mischungslösung aus Monomeren und des Entfernens der zweiten Mischungslösung aus Monomeren von einer Oberfläche des Grundmaterials; und
einem fünften Schritt des Erwärmens des Grundmaterials in einem Ofen zum Beenden der Polymerisation nach dem vierten Schritt.

## Revendications

1. Procédé de fabrication d'une lentille intraoculaire d'un type souple, qui est pliable, comprenant :
une première étape à former une première solution mixte monomérique à plusieurs monomères, et à produire un matériau de base par polymérisation desdits plusieurs monomères pour la lentille intraoculaire, et
une deuxième étape à chauffer ledit matériau de base produit dans la première étape dans un four afin de terminer la polymérisation,
**caractérisé par**
une troisième étape à immerger ledit matériau de base dans une deuxième solution mixte monomérique, qui est la même que ladite première solution mixte monomérique, afin d'imprégner ledit matériau de base par ladite deuxième solution mixte monomérique après ladite deuxième étape ;
une quatrième étape à retirer ledit matériau de base en dehors de ladite deuxième solution mixte monomérique et à éliminer ladite deuxième solution mixte monomérique d'une surface dudit matériau de base ; et
une cinquième étape à chauffer ledit matériau de base dans un four afin de terminer la polymérisation après ladite quatrième étape.
